# EUROPEAN PATENT SPECIFICATION

(11) **EP 0 430 393 B1**
(45) Date of publication and mention of the grant of the patent: **29.11.1995**
(21) Application number: 90306977.1
(22) Date of filing: 26.06.1990
(51) Int. Cl.: G01G 19/08

(54) **Arrangement for weighing a load**
Anordnung zum Wägen einer Last
Dispositif pour peser une charge

(30) Priority: 24.11.1989 FI 895647
(43) Date of publication of application: 05.06.1991
(73) Proprietor: TAMTRON OY, SF-33730 Tampere (FI)
(72) Inventor: Remes, Lauri, SF-33730 Tampere (FI); Jussila, Jyrki, SF-33720 Tampere (FI)
(74) Representative: Barlow, Roy James

(56) References cited:
- EP-A- 0 054 000
- EP-A- 0 223 384
- US-A- 3 376 537
- US-A- 3 857 452
- US-A- 4 694 921

## Description

The invention relates to an arrangement, in a vehicle or a corresponding unit, for measuring the weight of and quantities dependent on the weight of a load placed on an at least slightly tiltable platform, by raising this platform at least generally upwardly before the loading, by locking the platform in this raised position, by zeroing the measuring devices when necessary, and by thereafter carrying out the loading onto the platform in the raised position, the measuring being based on the measurement signals given by a plurality of sensor means located between the platform and the vehicle chassis.

In many cases it is very important to know the entire weight of either the load or the vehicle, the axle weights, or the weight distribution, or some other quantity dependent on weight. In this area the requirements imposed by legislation are becoming stricter all over the world. Likewise, commercial requirements impose ever higher precision requirements on knowing the exact weight of a load.

There are known numerous weighing devices onto which a vehicle or a vehicle combination is driven, in whole or in part, for the weighing of the vehicle and thereby of the load. However, such weighing devices must most commonly be located fixedly, their usability being therefore highly limited. In general such devices are available only in rather large industrial plants or the like. It is also possible to use separate weighing devices to be placed under the wheels of a vehicle, but their use is difficult and slow, and requires a good base.

In addition, there exists a large number of measuring devices installed in conjunction with the spring suspension of a vehicle, such as the arrangements disclosed in publications GB-1 290 674 and GB-2 178 546 and DE-1 030 206. Practically speaking, all weight-measuring arrangements located in connection with the spring suspension are, in one manner or another, based on the vertical movement caused by an increase in the load and allowed by the spring suspension of the vehicle. However, this leads to considerable and potential errors, since the spring constants of a spring suspension are even originally of different magnitudes and they change with time, and furthermore articulations in the spring suspension and the movement of the spring elements relative to each other produce friction forces which will distort the measuring result. Therefore these arrangements have not become common. PCT application FI-89/00066 discloses a hydraulic measuring arrangement installed between the wheel-and-axle sets and the chassis structure, i.e. alongside the springs, wherein the chassis of the vehicle is lifted off the springs for the measuring and during the loading the hydraulic fluid volume is maintained constant in order to prevent any movement of the spring suspension during the loading and thus to prevent its effect.

In addition, efforts have been made to measure loads by means of strain gauges, which measure changes in strain caused by the load in fixed structural parts. These devices, however, involve the considerable problem that the strains are often not linearly dependent on the load; the dependence between the load and the strain becomes so complicated that in practice it will lead to a result so imprecise that the benefit derived from the arrangement is questionable.

Publication DE-1 960 429 discloses an arrangement in which a plurality of hydraulic cylinders are installed between the loading surface and the vehicle chassis, and in which, as in the PCT application described above, the load bears substantially on hydraulic cylinders during loading and the fluid volume is maintained constant. This arrangement is highly complicated and requires, as compared with a conventional platform structure, a large number of extra components, specifically hydraulic cylinders, so that the implementation of this arrangement is relatively expensive. The arrangement is also relatively imprecise, since differences in temperature will cause variations in pressure in an extensive hydraulic system, and since in hydraulic cylinders friction will result in errors, a circumstance which is further emphasized by the fact that there is a plurality of cylinders. These problems are present in all methods based on hydraulics. Publication US-4 456 084 discloses an arrangement by means of which the weight of the load is computed, in order to give an alarm, on the basis of a signal given by a plurality of hydraulic cylinders installed between the load and the vehicle chassis. What is disclosed is thus mainly a coupling and a block diagram usable per se in connection with many hydraulic measuring arrangements.

The object of the present invention is to provide, in a vehicle or the like, an arrangement for weighing the loading weight, which arrangement (i) provides a reliable measuring result of the loaded weight and enables the loading distribution to be displayed, and which arrangement (ii) is independent of the spring suspension and the wheel-and-axle set structures of the vehicle, and which arrangement (iii) also provides a precise measuring result independently of the position of the vehicle or the location of the load on the loading platform, and (iv) enables weighing to be carried out even at times other than during loading. In addition, it is an object of the invention to provide an arrangement which can be installed not only in new vehicles but also retro-installed in old ones, and is of such a structure that it is not easily damaged during use. And it is a further object of the invention to provide an arrangement which requires as few additional components as possible in a normal vehicle structure and provides a precise measuring result regardless of temperature variations and other changes in the conditions. The object of the invention is thus to provide an arrangement which is reliable in operation and economical in price.

By using the arrangement according to the invention, a crucial improvement is achieved with respect to the disadvantages described above, and the objects defined above are achieved. The arrangement according to the invention is defined in the characterizing clause of Claim 1.

It can be deemed to be the most important advantage of the invention that a precise and reliable weighing result is always obtained of the load or batches of load, and with respect to these also of the distribution of the weight, regardless of the position of the vehicle during loading. It is a further advantage that the arrangement is economical in its acquisition costs and can be installed in many different types of vehicle, and in particular in vehicles having a tipping platform or a similar structure, in such a manner that there will not be a substantial number of actual additional parts. It is a further advantage of the invention that the arrangement does not necessarily require the use of hydraulics, at least as a measuring medium, the operation being reliable also at extreme temperatures and in dirty conditions and careless use, in which hydraulic systems easily yield erroneous results. It is an advantage that, by using the arrangement, information on the weight of the load can be obtained already during the loading and not only afterwards, both in the driver's cabin of the vehicle and/or outside the vehicle for the loader or someone else. Obtaining information of the correct loading weight and weight distribution in a vehicle or the like also enables an optimal result to be achieved in terms of transport. On the other hand, the system can be used in monitoring work carried out, both by public authorities and possible parties to a commercial deal.

The invention is described below in detail with reference to the accompanying drawings, in which
Figure 1 depicts a side elevation of a vehicle in which one weighing system according to the invention has been installed.
Figure 2 depicts a plan view of the vehicle according to Figure 1, through A-A of Figure 1.
Figure 3 depicts two load-measuring points of the platform, with their sensors, as seen in direction B of Figures 1 and 2.
Figure 4 depicts the parts surrounding one of the sensor structures of Figure 3, partly as a cutaway through plane C-C of Figures 1 and 2, the plane being parallel to the plane of Figure 3.
Figure 5 depicts the pivot-axle embodiment according to Figures 3 and 4, with its sensors, in the same representation as Figure 1 but in greater detail.
Figure 6 depicts a cross section through plane D-D of Figure 4 of the sensor device of Figures 3-5.
Figure 7 depicts an alternative embodiment of the sensor of the third load-measuring point along hypothetical plane E-E in Figure 1.
Figure 8 depicts a plan view of the sensor of Figure 7.

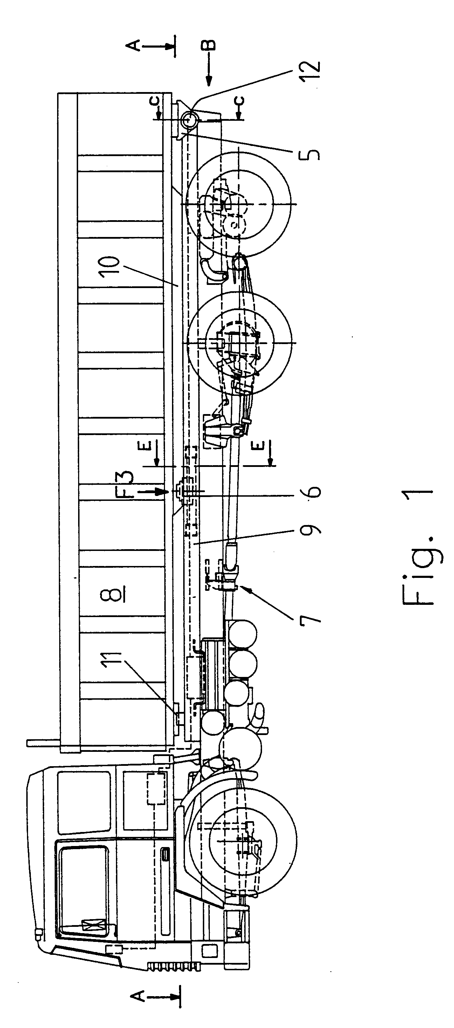

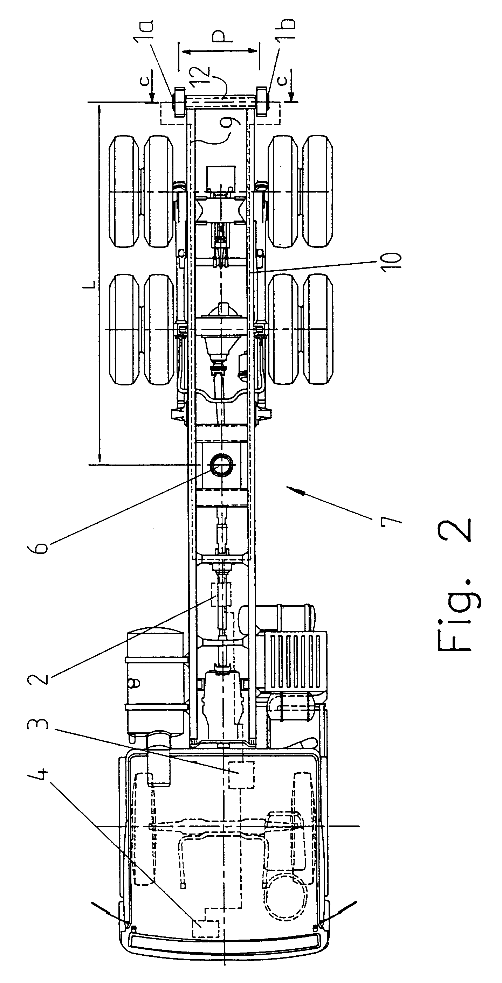

Figures 1 and 2 depict a vehicle, in this case a lorry 7, with a weighing arrangement according to the invention installed in it. In this case the lorry 7 is equipped with a tipping platform 8 which is tippable about a pivot axle 12 transverse to the longitudinal direction of the vehicle, located in the rear of the lorry. This pivot axle 12 is fixedly attached to the lorry chassis and/or an auxiliary chassis 9. The tilting of the platform 8 is in this case by means of a hydraulic cylinder 6 which is at a considerable distance L from the pivot axle 12 in the longitudinal direction of the vehicle. During driving, the load-bearing parts of the platform, such as beams 10, rest on the auxiliary chassis 9, and the platform 8 front end which is thus the opposite end of the platform in relation to the pivot axle 12 is supported by a centering structure 11. When it is desired to empty the platform 8 the pressure in the hydraulic cylinder 6 is raised so that the cylinder length increases and the platform pivots about the pivot axle 12, whereupon the platform, being at a considerable angle, often approx. 45°, becomes emptied of the loaded material.

According to one preferred embodiment, in conjunction with these lifting and axle devices there are arranged at least three sensor means for weighing, during loadings the goods on the platform. The first and second sensor means 1a, 1b, which are either similar or mirror images of each other, depending on the structure in each given case, are installed on the pivot axle 12 at a mutual spacing P transverse to the lorry. This mutual spacing P is substantial as compared with the widths of the platform and the vehicle, and it is at least one-third of the vehicle width, usually approx. one-half - 2/3 of the vehicle width and at maximum approx. equal to the vehicle width. By this placement of the sensor means 1a and 1b it is possible to rectify measuring errors due to the tilt of the vehicle and to detect the distribution of the load in the transverse direction of the vehicle. The third sensor means belonging to the measuring system is installed in conjunction with the lifting cylinder 6. In this case the sensor is a pressure gauge 2, which is installed to measure the pressure of the fluid volume in connection with the lifting cylinder 6. Since between (i) the rear-most sensor pair 1a, 1b and (ii) the measuring point of the front-most sensor, which is functionally the location of the hydraulic cylinder 6, there is a substantial distance L in the longitudinal direction of the vehicle, the effect of a longitudinal tilt of the vehicle can be corrected by using these two sensor groups 1a, 1b and 6, 2 respectively, and the distribution of the load on the platform in the longitudinal direction can be detected. The measuring thus takes place at a minimum of three points, i.e. at points 1a, 1b, and 6, in which case, when necessary, it is possible to compute not only the total weight but also, on the basis of the longitudinal and transverse weight distributions, the axle weights or, for example, weights on each wheel or on each wheel set.

It is an essential feature of the invention that, for the duration of loading in which measuring is to be carried out, the platform is held raised by the hydraulic cylinder 6 just to the extent that the load-bearing structures 10 of the platform becomes separated from the auxiliary chassis 9 and that the centering means 11 also become separated from each other, so that none of the parts of the platform will, during loading, bear on the auxiliary chassis 9 of the vehicle or on its other chassis structures, but the platform 8 bears merely on points 1a and 1b and 6. The raising by the hydraulic cylinder 6 required for this is, however, so slight that it has no tipping effect.

According to the invention, all of the sensor means are located and planned so that, at the points in question, the loading forces F1, F2, F3, F4, F5 are in their totality transferred via the sensor means to the vehicle chassis or auxiliary chassis 9. Also, for the duration of measuring, the fluid volume of the hydraulic cylinder is locked when the platform is in its said upward-tilted position, whereupon the platform 8 will bear rigidly and non-yieldingly on the said three sensor units, in which case no error sources due to yield are effective.

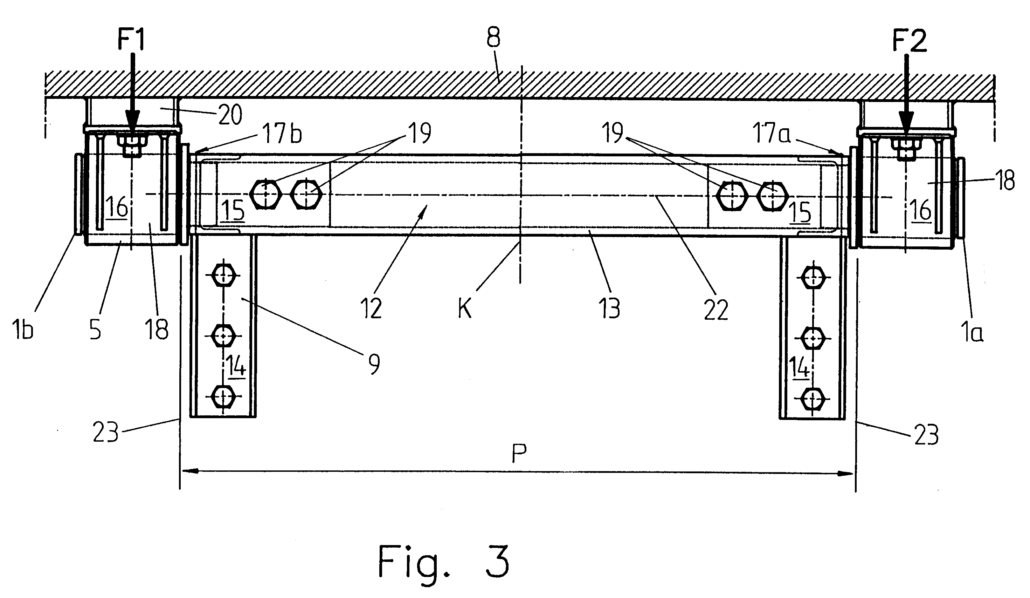

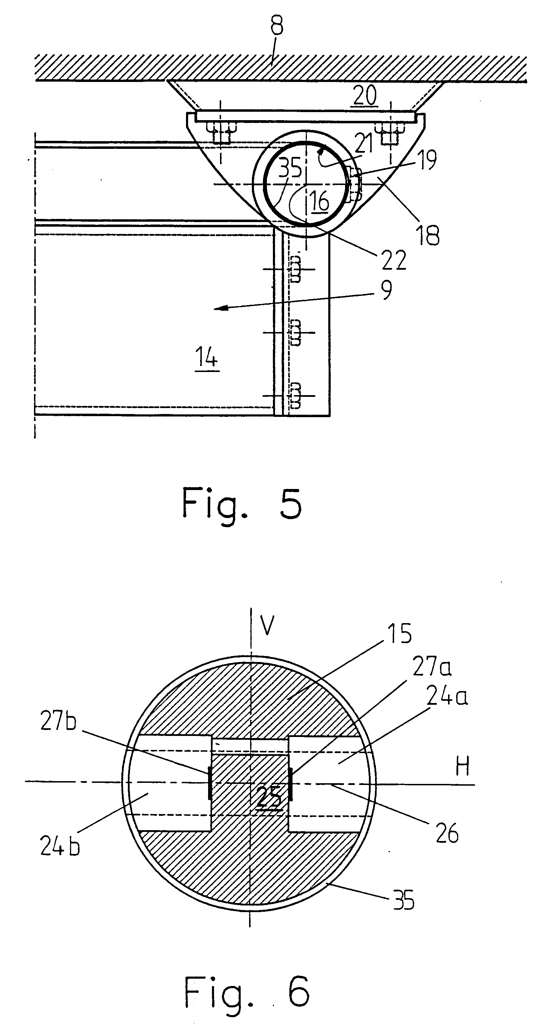

Figures 3 and 5 depict in greater detail the structure of the pivot axle. In this case the pivot axle 12 is made up of a pipe 13, the ends of which are rigidly attached to the longitudinal beams 14 of the auxiliary chassis 9. The sensors 1a, 1b are attached to the ends of this pipe 13 so that the locking part 15 of the sensors will be inside the pipe 13 and be attached to it rigidly and non-rotatably, for example by using through-going bolts 19 or in some other similar manner. The bearing part 16 of the sensors 1a, 1b projects from the ends 17a and 17b respectively of the pipe 13, in the manner of a cantilever beam. The pivot articulation 18 of the platform will be on this bearing part 16, forming a loop around it as can be seen in Figure 5. The pivot articulation 18 is attached to the platform 8 by using platform-chassis fasteners 20. The outer surfaces of the bearing parts 16 of the sensors 1a, 1b having been shaped as circular cylinders, and the holes 21 of the pivot articulations 18 attached to the platform having been shaped as corresponding cylindrical surfaces, pivot bearings 5 are formed on both sides of the center line of the platform when the pivot axles are installed on the bearing parts. The platform 8 is capable of turning about the axis 22, the bearing parts 16 of the sensors constituting the hinge pins. Between the bearing parts 16 and the pivot articulations 18 there may, according to need, be located necessary bearing material, or other necessary elements, in order to produce a pivot slide bearing. However, the important point is that, when the platform is being tilted, the pivot axle will cause no torsion, at least no considerable torsion, in the sensors; the pivoting takes place with low resistance.

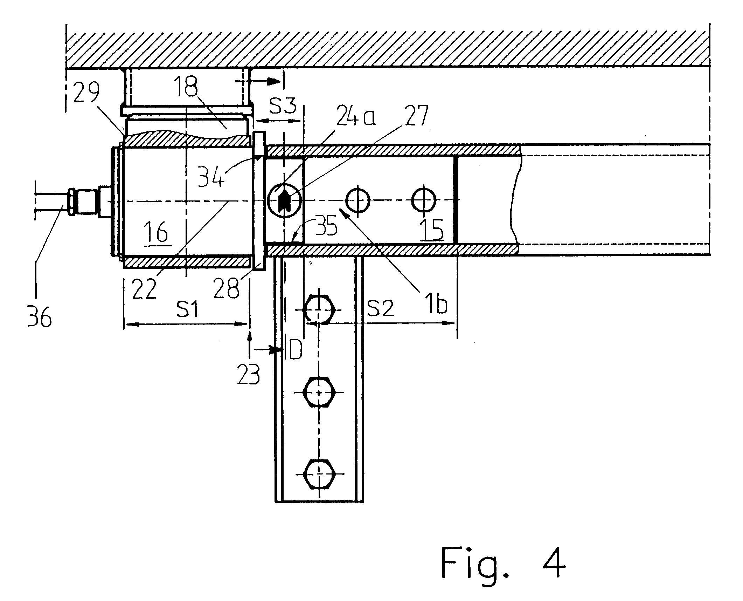

Figures 4 and 6 show details of this sensor structure, i.e. the bearing part 16 serving as the pin of the pivot bearing 5 of the sensor 1b, and around this part 16 the pivot articulation 18 turning about the axis 22 and the locking part 15. Each of the sensors 1a and 1b is preferably formed from a continuous metal piece, in which there are made, for example by turning or by machining in some other way, the said bearing part 16 and locking part 15. The surface pressure of the pivot articulation against the bearing part 16 ends at the interface 23. Immediately adjacent to the interface 23 between the bearing part 16 and the locking part 15, on the side of the locking part 15, there have been drilled or cut symmetrically in the horizontal plane H recesses 24a, 24b in such a manner that the cross section through this plane D-D is close to the shape of an I-beam which is symmetrical relative to the vertical plane V in such a manner that the formed web part 25 runs parallel to this vertical plane V. These recesses 24a, 24b are preferably flat-bottomed, in which case the cross sectional shape of the web is rectangular. Thus there is formed an I-beam-like portion S3, which serves as a "deflecting beam". On both sides of this web 25 there are attached strain gauges 27a, 27b in the center of the recesses in relation to the horizontal symmetry axis 26 of the recesses 24a, 20b. The electric couplings of the strain gauges 27a, 27b are led from the sensor 1a, 1b along some suitable conductor, such as a wire 36, or alternatively in a non-depicted manner, via the locking part 15 to the computing unit 3 of the vehicle. The strain gauges may be of any commercially available type suitable for this purpose, and they are installed in the same manner as strain gauges of the type concerned are otherwise installed in an I-beam.

In this embodiment there is formed at the interface 23 in the sensor 1a, 1b a flange 28, which serves as a stop surface parallel to the axis 22 of the pivot articulation 18 and at the same time helps to insulate the placement point of the strain gauges. On the outer side of the pivot articulation there serves as a stop a locking ring 29 or some other similar means. Between the flange 28 and the end of the pipe 13 there is a small clearance 34 and, likewise, between the outer surface of the I-beam portion S3 and the inner surface of the pipe 13 there is a clearance 35, these clearances making it possible for the I-beam portion S3 to deflect.

A load arriving on the platform induces a force F1 in the sensor 1b and respectively a force F2 in the sensor 1a, which forces are thus often not equal and produce in the sensors within the portion S3 deflections of which the shear stress component is measured by strain gauges 27a, 27b. The shear stress components are proportional to the force components F1, F2 in each given case, and they can be easily converted into displays, dependent on the weight, in the display device 4 in the vehicle.

A preferred structural form of the sensor 1a, 1b has been described here, but it is clear that the invention is not limited specifically to this form; especially the locking part 15, and specifically its cross-sectional shape, may be of a different type, for example rectangular. Likewise, the recesses 24, especially their cross-sectional shape, may be other than round, for example in the representation of Figure 4 they are rectangular, in which case their bottoms may be approximately flat or curved. Likewise, the recesses may also be oblong with rounded ends or have some other shape. In principle the sensors may be made from several parts which are coupled to each other in a suitable manner, but in general the best result is obtained by using a continuous material.

If the platform involved is not an actual tipping platform, and thus the said large pivot angle is not required of the pivot bearing 5, the pivot articulation 18 may be installed on the bearing part 16 even otherwise than so as to surround it. In such a case the pivot articulation may be made up, for example of only a semicircular segment; or it may bear, by its projecting edge parallel to the axis 22, on a corresponding groove in the bearing part 16; or the pivot articulation may constitute, contrary to the embodiment depicted in the figures, the pin-like male part of the pivot bearing 5, the part bearing on the center of the cylindrical female part of the sensor and forming the pivot bearing. The essential point is that the loading force F1 and F2 respectively is transmitted directly to the predetermined first cantilever-like portion S1 of the length of the sensor 1a, 1b; and that the second portion S2 of the sensor length is rigidly attached to the vehicle chassis, the devices, such as strain gauges 27, which convert the strains induced in this sensor piece under the effect of loading being situated within the area between these portions S1 and S2, for example in the I-beam-like portion S3; and that at least two such sensor means have been installed at a substantial distance P from each other and symmetrically on both sides of the vertical plane K running through the center line of the vehicle.

The third sensor means may thus be a pressure gauge arranged in conjunction with the fluid space of the lifting cylinder 6 and measuring the pressure of the fixed liquid volume during loading and being of any suitable commercially available pressure gauge type which may be installed either directly at a suitable point of the cylinder 6 wall or in the pipes connected with it, as is the sensor 2 in Figure 2. This sensor 2 is connected to the computing unit 3, as are the sensors 1a, 1b, in order to give weighing results to the display 4.

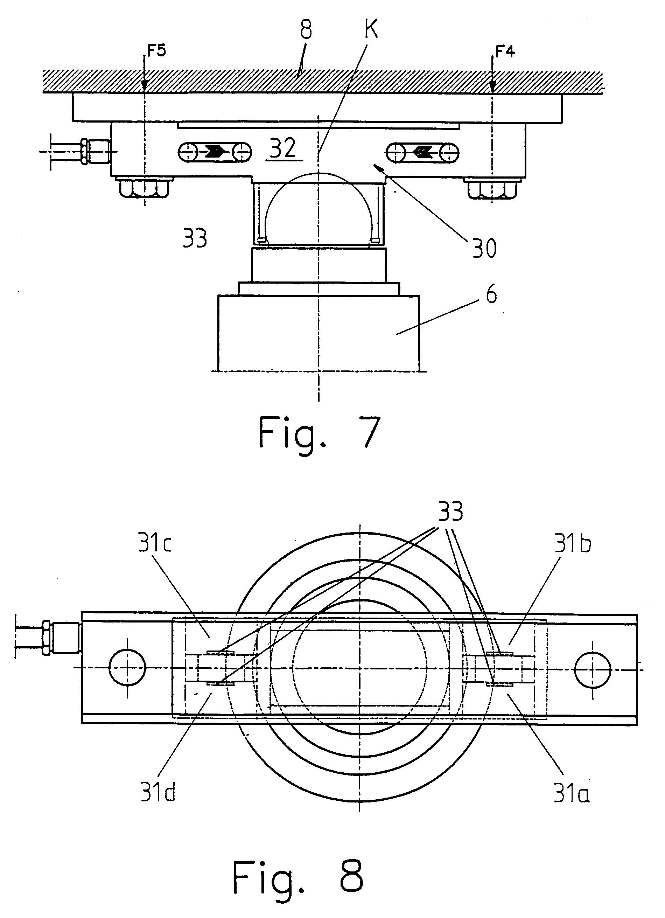

The sensor arranged in conjunction with the lifting cylinder 6 may also be implemented using strain gauges, for example in the manner depicted in Figures 7 and 8, in which the sensor 30 is made up of an at least approximately continuous metal piece 32, transverse to the vehicle, i.e. parallel to the axis 22, there being drilled in this metal piece, on both the front side and the back side and symmetrically in relation to the center line K of the vehicle, four recesses 31a-31d, the lifting cylinder bearing centrally between them. The components F5 and F4 of the loading force are introduced to this deflection sensor 30, close to its ends outside the recesses 31a-31d, whereupon the strain gauges 33 installed in the recesses will transmit a measuring signal proportional to the shear stress, as do sensors 1a, 1b. Some other design may also be applied to this sensor.

If the apparatus includes two lifting cylinders, it is possible to use a pressure gauge connected to their joint fluid space, or separate sensors for each cylinder, measuring the pressure of the liquid volume of each separately, or sensors based on strain gauges, for example, of the type depicted, in each.

## Claims

1. An arrangement in a vehicle or a corresponding unit for measuring the weight of a load placed on a platform and quantities dependent on the weight in an at least slightly raised weighing position of the platform (8), the weighing being based on measuring signals given by at least three sensors installed between the platform and the vehicle chassis;
wherein at least two (1a,1b) of the sensors use elongate members (15,16) for measuring the vertical stress component caused by the load force proportions (F1,F2) and for converting them into an electric measuring signal; which sensors are installed at a mutual spacing (P) and made of a substantially continuous metal piece each forming an axle pin for the or a pivot axle (12) of the platform with supporting surfaces on which, when the platform rests in the said weighing position, the pivot articulation (18) attached to the platform, or corresponding cantilever, will bear and with sections rigidly attached to the vehicle chassis (9);
wherein, the measuring point (6) of the third sensor (2) is located, in a direction perpendicular to the said distance (P), at a substantial distance (L) from said pivot axle, whereby the remaining portion (F3) of the load force is transferred to the vehicle chassis generally only via this sensor, the other parts of the platform (8) becoming separated from the chassis structures (9) under the effect of the lifting,
characterised in that said sensors (1a, 1b, 2) are arranged to measure only the load forces (F1, F2, F3; F4, F5);
in that said at least two sensors (1a, 1b) are shear stress sensors wherein said elongate members (15,16) each have one end part (16) forming said supporting surface and the other end part (15) rigidly attached to the chassis;
in that, starting at the interface (23) between the two parts (15) and (16) on which interface or in the vicinity of which interface the direct surface pressure of the pivot articulation (18) or the like against the first part (16) ends, and extending toward the second part (15), there are formed horizontal recesses (24a,24b) in the metal piece for obtaining in this area an I-beam-like portion (S3) substantially symmetrical in relation to the vertical plane (V); and
in that signal transducers, such as shear strain gauges (27a,27b), are attached on both sides of said vertical web (25) of this I-beam-like portion (S3) for measuring the vertical components caused by the load force proportions (F1,F2) and to convert them into an electric measuring signal.

2. An arrangement according to claim 1, characterised in that the said third sensor or set of sensors (2) is/are installed in conjunction with each mutually corresponding device such as a hydraulic cylinder (6) or hydraulic cylinders tilting the platform away from the chassis; in that the tilting device at each given time raises the platform upward through a small predetermined angle in order to prevent support between the platform parts (8, 10) and the chassis (9) during weighing and/or loading at any points other than at the sensors (1a, 1b, 6); and in that the tilting device (6) or devices are lockable in this position for the duration of the loading.

3. An arrangement according to claim 2, characterized in that the third sensor or set of sensors is/are pressure gauges (2), which are connected to the fluid space of each hydraulic cylinder (6), or to the fluid volume of the sensors which is common during loading, and which convert any pressure changes in the said separate fluid volumes or in the common fluid volume into electric measuring signals.

4. An arrangement according to claim 2, characterized in that the third sensor or set of sensors is/are force sensors, for example deflection sensors (30) installed between the tilting device (6) and the platform (8) and have, symmetrically in relation to the central line (K) of the vehicle, four recesses (31a-d) for obtaining two I-beam-like portions and these recesses have signal converters, such as strain gauges (33), converting the force (F4, F5) induced by weight to an electric measuring signal.

5. An arrangement according to claim 1, characterized in that, when the tilting device (6) raises the platform and its parts (8, 10) away from the vehicle chassis (9), predetermined points of the platform at a mutual spacing (p) are transferred to bear on the first parts (16) of the deflection sensors (1a, 1b).

6. An arrangement according to any of the above claims, characterized in that the measuring signals obtained from the measuring sensors (1a; 1b, 2, 6, 30) are converted, by predetermined computing procedures, to give the load weight, weight distribution, axle weight, or other quantity dependent on the load weight, by using electronic processing.

## Patentansprüche

1. Anordnung in einem Fahrzeug oder einer entsprechenden Vorrichtung zum Messen des Gewichtes einer Last, die auf einer Plattform angeordnet ist, und Größen, die von dem Gewicht abhängen in einer zumindest geringfügig angehobenen Wägeposition der Plattform (8), wobei der Wägevorgang auf Meßsignalen beruht, die von zumindest drei Sensoren ausgegeben werden, die zwischen der Plattform und dem Fahrzeugrahmen angeordnet sind;
wobei zumindest zwei (1a, 1b) der Sensoren längliche Elemente (15, 16) benutzen, um die vertikale Spannungskomponente zu messen, welche durch die Belastungskraftanteile (F1, F2) verursacht werden, und zu deren Umwandlung in ein elektrisches Meßsignal; wobei diese Sensoren in gegenseitiger Entfernung (P) angeordnet sind und aus einem im wesentlichen kontinuierlichen Metallstück bestehen, welches jeweils einen Achsschenkel für die oder eine Schwenkachse (12) der Plattform bilden und welche Stützflächen aufweisen, die, wenn die Plattform sich in dieser Wägeposition befindet, die Schwenkanlenkung (18), die an der Plattform oder einer entsprechenden Auskragung befestigt ist, tragen und Anschnitten, die starr an dem Fahrzeugrahmen (9) befestigt sind;
wobei der Meßpunkt (6) des dritten Sensors in einer Richtung senkrecht zu dieser Entfernung (P) angeordnet ist, und zwar mit einem wesentlichen Abstand (L) von dieser Schwenkachse, wodurch der verbleibende Bereich (F3) der Belastungskraft im allgemeinen nur durch diesen Sensor auf den Fahrzeugrahmen übertragen wird, und wobei die anderen Teile der Plattform (8) von diesen Rahmenteilen (9) unter dem Effekt des Anhebens getrennt sind,
**dadurch gekennzeichnet**, daß diese Sensoren (1a, 1b, 2) so angeordnet sind, daß sie nur die Belastungskräfte (F1, F2, F3; F4, F5) messen;
daß zumindest zwei Sensoren (1a, 1b) Scherspannungssenoren sind, wobei diese länglichen Elemente (15, 16) jeweils ein Endteil (16) aufweisen, welches diese Stützfläche bildet und das andere Endteil (15) starr an dem Chassis befestigt ist;
daß, beginnend mit der Zwischenfläche (23) zwischen den beiden Teilen (15) und (16), auf welcher Zwischenfläche und in der Nähe welcher Zwischenfläche der unmittelbare Oberflächendruck der Schwenkanlenkung (18) oder dergleichen gegen die ersten Endteile (16) gemessen wird, horizontale Vertiefungen (24a, 24b), gebildet sind, die sich gegen den zweiten Teil (15) erstrecken, und zwar in dem Metallteil, um in diesem Bereich einen I-Träger-ähnlichen Bereich (S3) zu erhalten, welcher im wesentlichen symmetrisch in Beziehung auf die senkrechte Ebene (V) ist; und
daß Signalaufnehmer, so wie Dehnungsmeßstreifen (27a, 27b), an beiden Seiten der vertikalen Platte (25) dieses I-Träger-ähnlichen Bereiches (S3) befestigt sind, um die vertikalen Komponenten zu messen, die durch die Belastungskraftanteile (F1, F2) bewirkt werden und um diese in ein elektrisches Meßsignal umzuwandeln.

2. Anordung gemäß Anspruch 1, dadurch gekennzeichnet, daß dieser dritte Sensor oder dieser Satz von Sensoren (2) in Verbindung mit einer jeweils entsprechenden Vorrichtung, wie einem Hydraulikzylinder (6) oder hydraulischen Zylindern installiert ist oder sind,um die Plattform gegenüber dem Rahmen zu kippen, daß diese Kippvorrichtung zu jeder gegebenen Zeit die Plattform um einen kleinen vorbestimmten Winkel anhebt, um zu verhindern, daß sich die Plattformteile (8,10) auf dem Chassis (9) während des Wiegens und/oder Ladens an anderen Punkten abstützen, als an den Sensoren (1a,1b,6); und daß die Kippeinrichtung oder die Kippeinrichtungen (6) in dieser Position für die Dauer des Ladens verriegelbar ist oder sind.

3. Anordnung gemäß Anspruch 2, dadurch gekennzeichnet, daß der dritte Sensor oder der Satz von Sensoren Druckaufnehmer (2) ist oder sind, welche mit dem Fluidraum jedes Hydraulikzylinders (6), oder mit dem Fluidvolumen der Sensoren welches gemeinsam während des Ladens besteht, verbunden sind, und welche alle Druckänderungen in diesem getrennten Fluidvolumina oder in dem gemeinsamen Fluidvolumen in elektrische Meßsignale umwandeln.

4. Anordnung gemäß Anspruch 2, dadurch gekennzeichnet, daß der dritte Sensor oder der Satz von Sensoren Kraftsensoren sind, zum Beispiel Verformungssensoren (30), die zwischen der Kippeirichtung (6) und der Plattform (8) installiert sind und welche symmetrisch im bezug auf die Zentrallinie (k) des Fahrzeuges vier Einschnitte (31a-d), und zwei I-Träger-artige Bereiche zu schaffen, wobei diese Einschnitte Signalumwandler wie Dehnmeßstreifen (33) aufweisen, welche die Kraft (F4, F5), die durch dieses Gewicht aufgebracht wird, in ein elektrisches Meßsignal umwandeln.

5. Anordnung gemäß Anspruch 1, dadurch gekennzeichnet, daß, wenn diese Kippeinrichtung (6) die Plattform und ihre Teile (8,10) von dem Fahrzeugrahmen (9) abhebt, vorbestimmte Punkte der Plattform im gegenseitigen Abstand (p), dafür vorgesehen sind, sich auf den ersten Teilen (16) der Verformungssensoren (1a,1b) abzustützen.

6. Anordnung gemäß einem der vohergehenden Ansprüche, dadurch gekennzeichnet, daß die Meßsignale, die von den Meßsensoren (1a;1b,2,6,30) erhalten werden, von vorbestimmten Rechenprozeduren umgewandelt werden, um das Gewicht der Last zu ergeben, die Lastverteilung, die Achslast und andere Größen welche vom Ladungsgewicht abhängen, und zwar indem elektronische Datenverarbeitung verwendet wird.

## Revendications

1. Dispositif, dans un véhicule ou une unité correspondante, pour mesurer le poids d'une charge disposée sur une plate-forme et des quantités dépendantes du poids dans une position de pesage au moins légèrement surélevée de la plate-forme (8), le pesage étant basé sur des signaux de mesure donnés par au moins trois capteurs installés sur le châssis du véhicule;
dans lequel au moins deux (1a, 1b) des capteurs utilise des éléments allongés (15, 16) pour mesurer la composante de contrainte verticale provoquée par les parties de forces de charge (F1, F2) et pour les convertir en un signal de mesure électrique; ces capteurs étant installés avec un espacement mutuel (P) et constitués par une pièce métallique sensiblement continue, formant chacun une broche d'axe pour l'axe de pivot ou pour un axe de pivot (12) de la plate-forme avec les surfaces de support sur lesquelles, lorsque la plate-forme repose dans ladite position de pesage, l'articulation de pivot (18) fixée à la plate-forme, ou à un port-à-faux correspondant, portera, et avec des sections fixées rigidement au châssis du véhicule (9);
dans lequel, le point de mesure (6) du troisième capteur (2) est disposé, dans une position perpendiculaire à ladite distance (P), à une distance substantielle (L) dudit axe de pivot, grâce à quoi la partie restante (F3) de la force de charge est transférée au châssis du véhicule globalement uniquement par la fermeture de ce capteur, les autres parties de la plate-forme (8) se trouvant séparées des structures du châssis (9) sous l'effet du soulèvement,
caractérisé en ce que lesdits capteurs (1a, 1b, 2) sont configurés de façon à ne figurer que les forces de charge (F1, F2, F3, F4, F5);
en ce que lesdits capteurs au nombre d'au moins deux (1a, 1b) sont des capteurs de contrainte de cisaillement lesdits éléments allongés (15, 16) ayant chacun une partie d'extrémité (16) formant ladite surface de support et l'autre partie d'extrémité (15) est fixée rigidement au châssis;
en ce que, à partir de l'interface (23) entre les deux parties (15) et (16), sur laquelle interface, ou au voisinage de laquelle interface aboutit la pression de surface directe de l'articulation du pivot (18), ou analogue, contre la première partie (16), et en direction de la deuxième partie (15), sont formées des cavités (24a, 24b) dans la pièce métallique pour obtenir, dans cette zone, une partie en forme de poutre en I (S3) sensiblement symétrique par rapport au plan vertical (V); et
en ce que des conducteurs de signaux, tels que des jauges de contrainte de cisaillement (27a, 27b) sont fixées sur les deux côtés de ladite l'âme verticale (25) de cette partie en forme de poutre en I (S3) pour mesurer les composantes verticales provoquées par les parties de force de charge (F1, F2), et pour les convertir en un signal de mesure électrique.

2. Dispositif selon la revendication 1, caractérisé en ce que ledit troisième capteur ou jeu de capteurs (2) est ou sont installés (S) en relation avec chaque dispositif mutuellement correspondant tel qu'un vérin hydraulique (6) ou des vérins hydrauliques inclinant la plate-forme pour l'éloigner du châssis; en ce que le dispositif d'inclinaison élève la plate-forme à chaque instant donné vers le haut d'un petit angle prédéterminé pour empêcher les supports entre les parties de plate-forme (8, 10) et le châssis (9) durant le pesage et/ou le chargement en tout point autre qu'au niveau des capteurs (1a, 1b, 6); et en ce que le dispositif d'inclinaison (6) ou les dispositifs d'inclinaison peuvent être verrouillés dans cette position pendant la durée du chargement.

3. Dispositif selon la revendication 2, caractérisé en ce que le troisième capteur ou jeu de capteurs est ou sont des jauges de pression (2), qui sont connectés à l'espace de fluide de chaque vérin hydraulique (6), ou au volume de fluide des capteurs qui est commun durant la charge, et qui convertit tout changement de pression dans lesdits volumes de fluide séparés ou dans le volume de fluide commun en signaux de mesures électriques.

4. Dispositif selon la revendication 2, caractérisé en ce que le troisième capteur ou jeu de capteurs est ou sont des capteurs de force, par exemple des capteurs de fléchissement (30) installés entre le dispositif d'inclinaison (6) et la plate-forme (8) et comportent, de façon symétrique par rapport à la ligne centrale (K) du véhicule, quatre cavités (31a-d) pour obtenir deux parties en forme de poutres en I, et entre ces cavités comportent des convertisseurs de signaux, tels que des jauges de contraintes (33), convertissant la force (F4, F5) induite par le poids en un signal de mesure électrique.

5. Dispositif selon la revendication 1, caractérisé en ce que, lorsque le dispositif d'inclinaison (6) élève la plate-forme et fait partie (8, 10) pour l'éloigner du châssis du véhicule (9), des points prédéterminés de la plate-forme en un espacement mutuel (p) sont transférés de façon à porter sur la première partie (16) des capteurs de fléchissement (1a, 1b).

6. Dispositif selon l'une quelconque des revendications précédentes, caractérisé en ce que les signaux de mesures obtenus à partir des capteurs de mesure (1a, 1b, 2, 6, 30) sont convertis, par des procédures de calcul prédéterminées, de façon à donner le poids de la charge, la distribution du poids, le poids sur les essieux, ou d'autres quantités dépendant du poids de la charge, grâce à un traitement électronique.
